(19) Europäisches Patentamt
European Patent Office
Office européen des brevets

(11) EP 0 504 784 B1

(12) **EUROPÄISCHE PATENTSCHRIFT**

(45) Veröffentlichungstag und Bekanntmachung des Hinweises auf die Patenterteilung:
**14.02.1996  Patentblatt 1996/07**

(51) Int Cl.6: **C08G 69/44**

(21) Anmeldenummer: **92104544.9**

(22) Anmeldetag: **17.03.1992**

(54) **Polyetheresteramide, Verfahren zu ihrer Herstellung und deren Verwendung**

Polyetheresteramides, process for their preparation and their use

Polyetheresteramides, leur procédé de préparation et leur utilisation

(84) Benannte Vertragsstaaten:
**BE CH DE FR GB LI NL**

(30) Priorität: **19.03.1991 DE 4108874**

(43) Veröffentlichungstag der Anmeldung:
**23.09.1992  Patentblatt 1992/39**

(73) Patentinhaber: **Elf Atochem Deutschland GmbH
D-40474 Düsseldorf (DE)**

(72) Erfinder:
• **Knipf, Helmut
  W-5353 Strempt-Mechernich (DE)**
• **de Jong, Eduard
  W-5210 Troisdorf-Eschmar (DE)**
• **Hapelt, Karl-Heinz
  W-5300 Bonn 1 (DE)**

(74) Vertreter: **Türk, Gille, Hrabal, Leifert
D-40593 Düsseldorf (DE)**

(56) Entgegenhaltungen:
| | |
|---|---|
| **EP-A- 0 025 487** | **EP-A- 0 025 828** |
| **DE-A- 3 247 755** | **FR-A- 2 401 947** |
| **FR-A- 2 555 186** | |

**Beschreibung**

Die vorliegende Erfindung betrifft Copolyetheresteramide, die aus Caprolactam oder Aminocapronsäure, 11-Aminoundecansäure und einem Addukt von Hexamethylendiamin und Decandicarbonsäure als amidbildende Komponente und aus äquimolaren Mengen eines Polyethylenglykoldiols und einer gesättigten aliphatischen Dicarbonsäure als etheresterbildende Komponente bestehen. Die vorliegende Erfindung betrifft weiterhin ein Verfahren zur Herstellung dieser Copolyetheresteramide, sowie ihre Verwendung zur Herstellung von Spinnvliesen, die zum Heißsiegeln von Textilien geeignet sind.

Aus DE-C-2949064 sind Copolyetheresteramide bekannt, die als Heißschmelzkleber für Textilien verwendet werden sollen. Diese Copolyetheresteramide enthalten im Polyamidteil mindestens 30 Gew.-% Laurinlactam. Diese Copolyetheresteramide besitzen jedoch den Nachteil, daß sie insbesondere bei niedrigeren Verklebungstemperaturen unbefriedigende Normalreißfestigkeiten und Waschbeständigkeiten besitzen und die Herstellung der Copolyamide bei hohen Drücken und Temperaturen durchgeführt werden muß. Weiterhin lassen sich die Copolyetheresteramide dieser Erfindung nicht ohne Trennfolien zu Spinnvliesen wickeln, da dies zum Verkleben der Vliese führt.

Aus DE-A-3247755 sind Copolyetheresteramide bekannt, die als Heißschmelzkleber für Textilien verwendet werden sollen. Diese bestehen im Polyamidblock aus Caprolactam und/oder ε-Aminocapronsäure, äquimolaren Mengen von Adipinsäure und primären aliphatischen und/oder cycloaliphatischen Diaminen, äquimolaren Gemischen aus Azelain- und/oder Sebazinsäure und primären aliphatischen und/oder cycloaliphatischen Diaminen und äquimolaren Gemischen aus Decandicarbon- und/oder Brassylsäure und primären aliphatischen und/oder cycloaliphatischen Diaminen, sowie einem Polyetheresterblock, der aus Polyalkylenoxidiolen und gesättigten aliphatischen, linearen Dicarbonsäuren gebildet wird. Die Copolyetheresteramide dieser Erfindung besitzen ebenfalls bei niedrigen Verklebungstemperaturen unbefriedigende Normalreißfestigkeiten und Waschbeständigkeiten. Auch lassen sie sich nicht ohne Einlegen einer Trennfolie zu Spinnvliesen wickeln, was zum Verkleben der Vliese führen würde.

Der vorliegenden Erfindung liegt daher die Aufgabenstellung zugrunde, Heißschmelzkleber zum Verkleben von Textilien zu finden, die gegenüber den bekannten Polyetheresteramid-Heißschmelzklebern ausreichende Normalreißfestigkeiten und Beständigkeiten auch bei niedrigen Verklebungstemperaturen aufweisen und deren Verarbeitung zu Spinnvliesen ohne weiteres möglich ist, d.h. daß das gesponnene Vlies am Ende des Transportbandes sofort ohne Einlegen einer Trennfolie aufgewickelt, gelagert und verschickt werden kann.

Es wurde nun überraschenderweise gefunden, daß die obige Aufgabe durch Copolyetheresteramide gelöst wird, bestehend aus 60 bis 80 Gew.-% eines Polyamidblockes erhältlich aus folgenden Monomeren:

20 bis 40 Gew.-% Caprolactam oder Aminocapronsäure
30 bis 50 Gew.-% 11-Aminoundecansäure
20 bis 40 Gew.-% Addukt aus Hexamethylendiamin und Decandicarbonsäure,

wobei die Gesamtmenge dieser polyamidbildenden Monomeren 100 Gew.-% ergibt, und aus 20 bis 40 Gew.-% eines Polyetherdiol/Dicarbonsäure-Blockes erhältlich aus äquimolaren Mengen Polyethylenglykol mit einem Molekulargewicht $\overline{M}_n$ von 400 bis 2000 und einer oder mehreren gesättigten aliphatischen Dicarbonsäuren mit 6 bis 36 Kohlenstoffatomen.

Vorzugsweise betragen die Mengen der obengenannten polyamidbildenden Komponenten

30 bis 40 Gew.-% Caprolactam oder Aminocapronsäure
30 bis 40 Gew.-% 11-Aminodecansäure und
25 bis 35 Gew.-% Addukt aus Hexamethylendiamin und Decandicarbonsäure.

Besonders bevorzugt sind die Mengen wie folgt:

33 bis 37 Gew.-% Caprolactam oder Aminocapronsäure
33 bis 37 Gew.-% 11-Aminoundecansäure
28 bis 32 Gew.-% Addukt aus Hexamethylendiamin und Decandicarbonsäure.

Bevorzugt sind Polyetheresteramide, die aus 65 bis 75 Gew.-% des Polyamid-Blockes und 25 bis 35 Gew.-% des Polyetherdiol/Dicarbonsäureblockes bestehen.

Besonders bevorzugt sind Polyetheresteramide, die aus 68 bis 72 Gew.-% des Polyamid-Blockes und aus 32 bis 28 Gew.-% des Polyetherdiol/Dicarbonsäure-Blockes bestehen.

Das Verfahren zur Herstellung der Polyetheresteramide gemäß der Erfindung ist dadurch gekennzeichnet, daß man, bezogen auf die Gesamtmenge der umgesetzten Komponenten 60 bis 80 Gew.-% eines Monomerengemisches aus

20 bis 40 Gew.-% Caprolactam oder Aminocapronsäure

30 bis 50 Gew.-% 11-Aminoundecansäure

20 bis 40 Gew.-% Addukt aus Hexamethylendiamin und Decandicarbonsäure,

wobei die Gesamtmenge dieser polyamidbildenden Monomeren 100 Gew.-% ergibt, und 20 bis 40 Gew.-% äquimolare Mengen eines Polyethylenglykoldiols mit einem Molekulargewicht $\overline{M}_n$ von 400 bis 2000 und einer oder mehreren gesättigten aliphatischen Dicarbonsäuren mit 6 bis 36 Kohlenstoffatomen polykondensiert, wobei in an sich bekannter Weise zunächst die polyamidbildenden Monomeren sowie die gesättigten aliphatischen Dicarbonsäuren unter Bildung eines Polyamids mit endständigen Carboxylgruppen umgesetzt werden und das Reaktionsprodukt dann mit dem Polyethylenglykoldiol, ggf. in Anwesenheit eines üblichen Katalysators, umgesetzt wird.

Bevorzugt wird ein Polyethylenglykoldiol mit einem zahlenmittleren Molekulargewicht von $\overline{M}_n$ = 500 bis 1000, besonders von 500 bis 800. Als bevorzugte gesättigte aliphatische Carbonsäuren des Polyetherdiol/ Dicarbonsäure-Blokkes werden lineare Dicarbonsäuren mit 6 bis 13 Kohlenstoffatomen eingesetzt, die aus den eingangs genannten Literaturstellen bekannt sind. Bevorzugt ist Brassylsäure und besonders Decandicarbonsäure.

Gegenstand der Erfindung sind weiterhin Spinnvliese, die aus diesen Polyetheresteramiden gebildet sind. Die Herstellung dieser Spinnvliese erfolgt in an sich bekannter Weise, vgl. Handbuch der textilen Fixiereinlagen von Dr. Peter Sroka, Sinus-Verlag, 1980. Die Herstellung wird nachfolgend genauer beschrieben. Diese Spinnvliese werden zum Heißsiegeln von Textilien verwendet.

Es zeigte sich überraschenderweise, daß die Copolyetheresteramide gemäß der Erfindung, auch nach chemischen Reinigungen, Waschvorgängen und bei niedrigen Verklebungstemperaturen eine sehr große Klebkraft haben. Weiterhin war es überraschend, daß sich mit den Copolyetheresteramiden der vorliegenden Erfindung ohne weiteres Spinnvliese herstellen lassen, die am Ende des Transportbandes sofort, d.h. ohne Einlegen des üblicherweise verwendeten Trennsilikonpapieres aufgewickelt, gelagert und verschickt werden können. Dies stellt einen für den Fachmann überraschenden enormen technischen Fortschritt gegenüber den Copolyetheresteramiden des Stands der Technik dar, deren Verwendung in diesem Verfahren, wie Vergleichsversuche zeigen, zum Verkleben der Vlieslagen führt. Dieses Ergebnis ist besonders deshalb unerwartet, weil gemäß der oben zitierten DE-A-2949064 die Copolyetheresteramide als polyamidbildende Komponente mindestens 30 Gew.-% Laurinlactam enthalten müssen, was gemäß der Erfindung nicht nötig ist. Obwohl es gemäß der Erfindung nicht in den Copolyetheresteramiden enthalten ist, besitzen diese die obengenannten verbesserten Eigenschaften.

Die Copolyetheresteramide schmelzen im Bereich von etwa 90 bis 130°C, bestimmt nach der DSC-Methode (Differential-Scanning-Calometrie-Methode). Bevorzugt liegt der Schmelzpunkt im Bereich von 100 bis 120°C. Niedrig schmelzende Produkte sind zur Verschmelzung von wärmeempfindlichen Textilien besonders geeignet. Die erfindungsgemäß hergestellten polyetheresteramide haben gegenüber den Copolyesteramiden des Stands der Technik - besonders bei den bei wärmeempfindlichen Textilien bevorzugten niedrigen Verklebungstemperaturen - sehr gute Eigenschaften, wie die Vergleichsversuche zeigen. Besonders die Normalreißfestigkeiten, sowie die Beständigkeit gegenüber Waschvorgängen und chemischen Reinigungen sind bei niedrigen Verklebungstemperaturen gegenüber den Copolyetheresteramiden des Stands der Technik deutlich verbessert.

Die Copolyetheresteramide haben zweckmäßig eine relative Lösungsviskosität von 1.3 bis 1.75. Die untere Grenze liegt bevorzugt bei 1.45. Die obere Grenze liegt zweckmäßig bei 1.65. Gemessen wird die relative Lösungsviskosität einer 0.5 %igen Lösung in m-Kresol bei 20°C im Ostwald-Viskosimeter.

Die Copolyetheresteramide haben zweckmäßig einen Schmelzindex bei 150°C bei 21.2 N nach DIN 53735 von etwa 5 bis 40 g/10 min. Die obere Grenze liegt zweckmäßig bei 30, die untere zweckmäßig bei etwa 7 g/10 min.

Die Herstellung der Copolyetheresteramide erfolgt wie im Stand der Technik beschrieben. Zweckmäßig ist die Herstellung wie folgt: Zunächst werden die copolyamidbildenden Bestandteile sowie die gesättigten aliphatischen Carbonsäuren mit 6 bis 36 Kohlenstoffatomen unter Bildung eines Copolyamids mit endständigen Carboxylgruppen umgesetzt. Die Umsetzung erfolgt zweckmäßig bei Temperaturen von 180 bis 300°C, bevorzugt etwa 200 bis 260°C. Dabei stellen sich Innendrücke von 5 bis 10 bar ein, welche ca. zwei Stunden gehalten werden. Nach dieser Vorkondensationszeit wird der Druck langsam durch öffnen des Ventils auf Normaldruck reduziert und innerhalb von 1 bis 2 Stunden das restliche Wasser abdestilliert. Anschließend wird das Polyethylenglykol zugefügt sowie zweckmäßig ein üblicher Katalysator, und unter leichtem Stickstoffstrom wird innerhalb von 20 bis 60 Minuten auf etwa 180 bis 300°C, bevorzugt etwa 260°C, aufgeheizt. Dann wird unter reduziertem Druck (< 10 mbar) innerhalb von 20 bis 60 Minuten, bevorzugt 30 Minuten, nachkondensiert. Die erhaltenen Polykondensate werden durch eine Lochdüse in ein Wasserbad ausgesponnen und granuliert.

Als Katalysatoren werden die gemäß dem Stand der Technik für die Reaktion bekannte Katalysatoren eingesetzt. Bevorzugt sind Dialkylzirconate, wobei die Alkylgruppen verzweigt oder linear sein können und 1 bis 24 C-Atome enthalten. Es können auch Tetraalkylorthotitanate eingesetzt werden. Bevorzugt sind Alkylgruppen mit 4 C-Atomen, insbesondere n-Butylverbindungen.

Die Menge des Katalysators liegt im bekannten Bereich von etwa 0.01 bis 5 Gew.-%, bezogen auf das Gewicht des Reaktionsgemisches. Bevorzugt liegt die Menge des Katalysators unter etwa 1 Gew.-%.

Die Copolyetheresteramide gemäß der Erfindung lassen sich mit handelsüblichen Extrusionsanlagen bei Massetemperaturen von ca. 200°C extrudieren und zu Spinnvliesen verarbeiten, die sofort klebfrei sind und ohne Einlage von Zwischenfolien aufgewickelt und sofort verschickt werden können.

Mit Hilfe der Copolyetheresteramide gemäß der Erfindung lassen sich Textilien vielfältiger Art miteinander verkleben. Beispiele hierfür sind Naturstoffe und/oder Kunststoffe wie Wolle, Seide, Baumwolle und/oder Polyester, Polyamide und dergleichen. Auch Felle und dergleichen können als Substrate mitverklebt werden. Zwischen die zu verklebenden Flächen wird ein Coplyetheresteramid gemäß der Erfindung, bevorzugt in Form eines Spinnvlieses gegeben. Das Copolyamid kann natürlich auch in Form von Folien, Fäden, kurzgeschnittenen Fäden und Pulvern eingesetzt werden. Aus Pulvern können auch in an sich bekannter Weise Dispersionen hergestellt und zum Heißsiegeln verwendet werden. Die Verklebung erfolgt unter Anwendung von erhöhter Temperatur und Druck. Die Preßtemperatur richtet sich in erster Linie nach der Temperaturempfindlichkeit des Substrats, muß aber so hoch liegen, daß ein Schmelzen und Verkleben erfolgt. Beim Erkalten auf Raumtemperatur tritt Verfestigung unter Verbindung der verklebten Substrate ein.

Die Herstellung der Pulver erfolgt in gleicher Weise, wie dies bei den Polyamidheißschmelzklebern bekannt ist.

## Beispiel 1

In einem mit Rührwerk und Kolonne versehenen Autoklaven werden folgende Komponenten eingewogen:

24,5 kg Caprolactam
24,5 kg 11-Aminoundecansäure
7,0 kg Hexamethylendiamin als 80 %ige wäßrige Lösung
22,1 kg Decandicarbonsäure.

Nach Spülung des Reaktors mit Stickstoff wurde das geschlossene System unter Rühren auf 230°C aufgeheizt. Dabei stellte sich ein Innendruck von ca. 6 bar ein, welcher über 2 Stunden gehalten wurde. Nach dieser zweistündigen Vorkondensationszeit wurde der Druck langsam durch öffnen eines Ventils auf Normaldruck reduziert. Anschließend wurde innerhalb von einer Stunde das restliche Wasser abdestilliert. Nach Zugabe von

21,9 kg Polyethylenglykol ($\overline{M}_n = 600$) und
0,4 kg Di-n-Butylzirkonat

wurde unter einem leichten Stickstoffstrom innerhalb von 30 Minuten auf 260°C aufgeheizt. Anschließend wurde unter reduziertem Druck (< 10 mbar) innerhalb von 30 Minuten nachkondensiert. Das erhaltene Polykondensat wurde durch eine Lochdüse in ein Wasserbad ausgesponnen und granuliert. Die ermittelten physikalischen Meßwerte finden sich in der nachfolgenden Tabelle.

Das Granulat wurde auf einer handelsüblichen Kaltmahlanlage vermahlen. Das erhaltene Pulver wurde auf einer handelsüblichen Siebanlage in verschiedene Korngrößenbereiche getrennt. Die Fraktion 80-200 µm wurde textiltechnologisch untersucht. Die ermittelten Werte finden sich in der nachfolgenden Tabelle 1.

## Beispiele 2 - 6

Die Beispiele 2 - 6 wurden in analoger Weise mit den in Tabelle 1 genannten Gewichtsverhältnissen unter gleichen Bedingungen wie Beispiel 1 hergestellt. Insbesondere wurde unter den gleichen Druck-, Temperatur- und zeitlichen Bedingungen gearbeitet. Das Polyethylenglykol hatte in allen Beispielen dieselbe zahlenmittlere Molekularmasse wie das Polyethylenglykol in Beispiel 1. Das Gewichtsverhältnis von Polyetheresteramid-bildenden Komponenten zur Menge des Katalysators (Di-n-butylzirkonat) war in allen Beispielen wie im Beispiel 1.

VERGLEICHSBEISPIEL 1: gemäß DE-C-2949064 (Anspruch 1)

Wie im Beispiel 1 beschrieben wurden folgende Komponenten eingewogen

21,0 kg Caprolactam
28,0 kg Laurinlactam
7,0 kg Hexamethylendiamin als 80 %ige wässrige Lösung
22,1 kg Decandicarbonsäure

und auf eine Temperatur von 290°C aufgeheizt. Es stellte sich ein Innendruck von 25 bar ein. Nach einer zweistündigen Vorkondensation wurde innerhalb von einer Stunde auf Normaldruck reduziert. Nach einer halbstündigen Entwässerungsphase (ggf. unter leichtem Stickstoffstrom oder reduziertem Druck) wurde die Temperatur auf 260°C reduziert. Danach wurden folgende Komponenten eingewogen:

21,9 kg Polyethylenglykol ($\overline{M}_n$=600)
0,4 kg Di-n-Butylzirkonat

Danach wurde unter reduziertem Druck (< 10 mbar) bei 260°C innerhalb von einer Stunde bis zur gewünschten Endviskosität nachkondensiert. Das erhaltene Polykondensat wurde wie in Beispiel 1 beschrieben granuliert, vermahlen und untersucht. Die ermittelten Werte finden sich in der nachfolgenden Tabelle 1.

VERGLEICHSBEISPIEL 2: gemäß DE-C-2949064 (Beispiel 5)

Wie in Vergleichsbeispiel 1 beschrieben wurde ein Copolyetheresteramid gemäß der DE-C-2949064 Beispiel 5 aus folgenden Komponenten hergestellt:

11,52 kg Laurinlactam
6,40 kg Caprolactam
3,40 kg Hexamethylendiamin als 80 %ige wässrige Lösung
5,66 kg Polytetrahydrofuran $M_n$= 1000
5,01 kg Adipinsäure
0,13 kg Di-n-Butylzirkonat

Das vermahlene und klassifizierte Produkt wurde wie in Beispiel 1 beschrieben untersucht. Die ermittelten Wert finden sich in der nachfolgenden Tabelle 1.

Blockverhalten der Produkte der Beispiele und Vergleichsbeispiele

Von den in der Tabelle aufgeführten Produkten wurden auf einem Laborextruder bei Massetemperaturen von 140° C Flachfolien mit einer Dicke von 100 µm extrudiert. Es wurde die Zeit vom Austritt aus der Düse bis zum Erreichen einer blockfreien (nicht klebrigen) Oberfläche ermittelt.

| Beispiel Nr. | Zeit in sek. |
|---|---|
| 1 | 65 |
| 2 | 65 |
| 3 | 70 |
| 4 | 65 |
| 5 | 65 |
| 6 | 80 |
| Vergleichsbeispiel 1 | 125 |
| 2 | 130 |

In der nachfolgenden Tabelle sind die Temperaturangaben bei der Messung der Festigkeiten die Plattentemperaturen zwischen den zu verklebenden Substraten. Es wurde 15 Sekunden bei 350 mbar heißgesiegelt. Die Reißfestigkeit ist angegeben in Newton pro 50 mm Prüfkörperbreite in Anlehnung an DIN 54310. Die verklebten Substrate waren: Einlagestoff bestehend aus 100 % Baumwolle; Oberstoff aus Mischgewebe Polyester/Schurwolle 55%/45%. Auftragsgewicht: g Heißschmelzkleber pro $m^2$ verklebte Fläche.

Tabelle 1

| | BEISPIEL 1 | VERGLEICHS-BEISPIEL 1 | VERGLEICHS-BEISPIEL 2 |
|---|---|---|---|
| CAPROLACTAM | 24,5 GEW % | 21,0 GEW % | 20,0 GEW % |
| LAURINLACTAM | - | 28,0 GEW % | 36,0 GEW % |
| 11-AMINOUNDECANSÄURE | 24,5 GEW % | | |
| . HEXAMETHYLENDIAMIN/ DECANDICARBONSÄURE | 21,0 GEW % | 21,0 GEW % | - |
| . HEXAMETHYLENDIAMIN/ ADIPINSÄURE | - | - | 24,0 GEW % |
| PEG/DECANDICARBONSÄURE | 30,0 GEW % | 30,0 GEW % | - |
| PTHF/ADIPINSÄURE | - | - | 20,0 GEW % |
| SCHMELZBEREICH °C | 110-115 | 108-113 | 110-122 |
| RELATIVE LÖSUNGSVISKOSITÄT | 1,60 | 1,59 | 1,50 |
| SCHMELZINDEX g/10 min BEI 150°C DIN 53735 | 13,0 | 15,0 | 11,0 |
| NORMALREISSFESTIGKEIT | | | |
| 120 °C | 9,0 | 5,5 | < 1,5 |
| 130 °C | 12,0 | 6,5 | 10,0 |
| 140 °C | 12,5 | 7,5 | 11,0 |
| 150 °C | 15,5 | 8,5 | 14,0 |
| 160 °C | 16,5 | 9,0 | 16,0 |
| NASSWAESCHE 5x 60°C | | | |
| 120 °C | 9,0 | 4,0 | 8,0 |
| 130 °C | 11,0 | 4,0 | 10,0 |
| 140 °C | 12,0 | 3,5 | 10,5 |
| 150 °C | 15,5 | 4,5 | 14,0 |
| 160 °C | 16,0 | 5,0 | 15,5 |
| CHEM.REINIGUNG 5x | | | |
| 120 °C | 9,0 | 3,0 | 7,0 |
| 130 °C | 11,0 | 3,5 | 10,0 |
| 140 °C | 12,5 | 4,0 | 12,0 |
| 150 °C | 16,5 | 5,0 | 15,0 |
| 160 °C | 16,0 | 6,0 | 16,0 |
| AUFTRAGSGEWICHT | 15 | 15 | 17 |

PEG : Polyethylenglycoldiol $\overline{M}_n$ 600

PTHF ; Polytetrahydrofurandiol $\overline{M}_n$ 1000

### Tabelle 1 (Fortsetzung)

| | BEISPIEL 2 | BEISPIEL 3 | BEISPIEL 4 | BEISPIEL 5 | BEISPIEL 6 |
|---|---|---|---|---|---|
| CAPROLACTAM | 21 GEW % | 28 GEW % | 14 GEW % | 21 GEW % | 28 GEW % |
| LAURINLACTAM | - | - | - | - | - |
| 11-AMINOUNDECAN-SAEURE | 21 GEW % | 28 GEW % | 31,5GEW % | 21 GEW % | 28 GEW % |
| HEXAMETHYLENDIAMIN-DECANDICARBONSÄURE | 28 GEW % | 14 GEW % | 24,5GEW % | 18 GEW % | 24 GEW % |
| HEXAMETHYLENDIAMIN-ADIPINSAEURE | - | - | - | - | - |
| PEG/ADIPINSAEURE | 30 GEW % | 30 GEW % | 30 GEW % | 40 GEW % | 20 GEW % |
| SCHMELZBEREICH IN ° C | 120-125 | 108-115 | 123-128 | 108-114 | 109-115 |
| RELATIVE LOESUNGSVISKOSITAET | 1,59 | 1,59 | 1,57 | 1,60 | 1,58 |
| SCHMELZINDEX g/10 MIN 150 °C DIN 53735 | 13 | 14 | 16 | 18 | 18 |
| NORMALREISSFESTIGK. | | | | | |
| 120°C | 5 | 8,5 | 5 | 9,5 | 9,5 |
| 130°C | 10 | 12,5 | 9,5 | 12,5 | 12,5 |
| 140°C | 12 | 12,5 | 12 | 13 | 12,5 |
| 150°C | 15 | 16 | 14 | 15,5 | 15 |
| 160°C | 16 | 16 | 15,5 | 16,5 | 16 |
| NASSWAESCHE 5*60°C | | | | | |
| 120°C | 5 | 8,5 | 4,5 | 7,5 | 9 |
| 130°C | 10 | 12 | 9 | 11 | 12 |
| 140°C | 11 | 12,5 | 11,5 | 11,5 | 12 |
| 150°C | 15 | 15,5 | 14 | 15,5 | 15 |
| 160°C | 15 | 16 | 14,5 | 16 | 16 |
| CHEM. REINIGUNG 5* | | | | | |
| 120°C | 5 | 8,5 | 4,5 | 8,5 | 9,5 |
| 130°C | 10 | 12 | 10 | 10,5 | 12,5 |
| 140°C | 12 | 13 | 11,5 | 12 | 12,5 |
| 150°C | 16 | 15,5 | 15,5 | 16 | 16 |
| 160°C | 16 | 16 | 15,5 | 15,5 | 16 |
| AUFTRAGSGEWICHT g/m² | 15 | 16 | 14 | 15 | 15 |

## VERGLEICHSBEISPIELE ZUR SPINNVLIESHERSTELLUNG

Die in Beispiel 1 und den Vergleichsbeispielen 1 und 2 beschriebenen Produkte wurden auf einer handelsüblichen Laborextrusionsanlage, welche mit einem Spinnbalken mit 50 Düsen ausgerüstet war, bei Massetemperaturen von 200° C extrudiert. Nach Verlassen der Düse wurden die im Luftstrom leicht verwirbelten Fäden auf ein Transportband abgelegt und abgezogen. Die Verweilzeit auf dem Band betrug etwa 3 Minuten. Am Ende des Transportbandes wurde das Vlies mittels einer Wickelanlage auf eine Papphülse aufgewickelt. Dabei stellte sich heraus, daß sich nur das Vlies der erfin-

EP 0 504 784 B1

dungsgemäßen Zusammensetzung ohne Einbringung einer zusätzlichen Trennfolie problemlos wickeln ließ und auch sofort wieder abrollbar war. Das erhaltene Vlies war trocken und blockfrei. Die Vergleichsversuche gemäß dem Stand der Technik ließen sich nicht ohne Trennfolie wickeln und waren erst nach mehreren Stunden trocken und blockfrei. Ein Zusammenlegen ohne Trennfolie führte zum Verkleben des Vlieses.

**Patentansprüche**

1. Polyetheresteramide bestehend aus 60 bis 80 Gew.-% eines Polyamidblockes erhältlich aus folgenden Monomeren:

   20 bis 40 Gew.-% Caprolactam oder Aminocapronsäure
   30 bis 50 Gew.-% 11-Aminoundecansäure
   20 bis 40 Gew.-% Addukt aus Hexamethylendiamin und Decandicarbonsäure,

   wobei die Gesamtmenge dieser polyamidbildenden Monomeren 100 Gew.-% ergibt, und aus 20 bis 40 Gew.-% eines Polyetherdiol/ Dicarbonsäure-Blockes erhältlich aus äquimolaren Mengen Polyethylenglykol mit einem Molekulargewicht $\overline{M}_n$ von 400 bis 2000 und einer oder mehreren gesättigten aliphatischen Dicarbonsäuren mit 6 bis 36 Kohlenstoffatomen.

2. Polyetheresteramide nach Anspruch 1, dadurch gekennzeichnet, daß der Polyamidblock aus folgenden Monomeren erhältlich ist :

   30 bis 40 Gew.-% Caprolactam oder Aminocapronsäure,
   30 bis 40 Gew.-% 11-Aminoundecansäure
   25 bis 35 Gew.-% Addukt aus Hexamethylendiamin und Decandicarbonsäure,

   wobei die Gesamtmenge dieser polyamidbildenden Monomeren 100 Gew.-% ergibt.

3. Polyetheresteramide nach Anspruch 1, dadurch gekennzeichnet daß der Polyamidblocks aus folgenden Monomeren erhältlich ist:

   33 bis 37 Gew.-% Caprolactam oder Aminocapronsäure
   33 bis 37 Gew.-% 11-Aminoundecansäure
   28 bis 32 Gew.-% Addukt aus Hexamethylendiamin und Decandicarbonsäure

   wobei die Gesamtmenge dieser polyamidbildenden Monomeren 100 Gew.-% ergibt.

4. Polyetheresteramide nach Anspruch 1, dadurch gekennzeichnet, daß sie aus 65 bis 75 Gew.-% des Polyamidblokkes und 25 bis 35 Gew.-% des Polyetherdiol/Dicarbonsäure-Blockes bestehen.

5. Polyetheresteramide nach Anspruch 1, dadurch gekennzeichent, daß sie aus 68 bis 72 Gew.-% des Polyamidblokkes und 32 bis 28 Gew.-% des Polyetherdiol/Dicarbonsäure-Blockes bestehen.

6. Verfahren zur Herstellung von Polyetheresteramiden, dadurch gekennzeichnet, daß man, bezogen auf die Gesamtmenge der umgesetzten Komponenten, 60 bis 80 Gew.-% eines Monomerengemisches aus

   20 bis 40 Gew.-% Caprolactam oder Aminocapronsäure
   30 bis 50 Gew.-% 11-Aminoundecansäure
   20 bis 40 Gew.-% Addukt aus Hexamethylendiamin und Decandicarbonsäure,

   wobei die Gesamtmenge dieser polyamidbildenden Monomeren 100 Gew.-% ergibt, und 20 bis 40 Gew.-% äquimolare Mengen eines Polyethylenglykoldiols mit einem Molekulargewicht $\overline{M}_n$ von 400 bis 2000 und einer oder mehreren gesättigten aliphatischen Dicarbonsäuren mit 6 bis 36 Kohlenstoffatomen polykondensiert, wobei in an sich bekannter Weise zunächst die polyamidbildenden Monomeren sowie die gesättigten aliphatischen Dicarbonsäuren unter Bildung eines Polyamids mit endständigen Carboxylgruppen umgesetzt werden und das Reaktionsprodukt dann mit dem Polyethylenglykoldiol, ggf. in Anwesenheit eines üblichen Katalysators, umgesetzt wird.

7. Verfahren nach Anspruch 6, dadurch gekennzeichnet, daß der Polyamidblock aus

30 bis 40 Gew.-% Caprolactam oder Aminocapronsäure
30 bis 40 Gew.-% 11-Aminoundecansäure
25 bis 35 Gew.-% Addukt aus Hexamethylendiamin und Decandicarbonsäure

umgesetzt wird.

8. Verfahren nach Anspruch 6, dadurch gekennzeichnet, daß der Polyamidblock aus

33 bis 37 Gew.-% Caprolactam oder Aminocapronsäure
33 bis 37 Gew.-% 11-Aminoundecansäure
28 bis 22 Gew.-% Addukt aus Hexamethylendiamin und Decandicarbonsäure

umgesetzt wird.

9. Verfahren nach Ansprüchen 6 bis 8, dadurch gekennzeichnet, daß das Polyetheresteramid aus 65 bis 75 Gew.-% des Polyamidblockes und 25 bis 35 Gew.-% des Polyetherdiol/Dicarbonsäure-Blockes gebildet wird.

10. Verfahren nach Ansprüchen 6 bis 8, dadurch gekennzeichnet, daß das Polyetheresteramid aus 68 bis 72 Gew.-% des Polyamidblockes und 32 bis 28 Gew.-% des Polyetheresterblockes gebildet wird.

11. Spinnvliese aus den Polyetheresteramiden nach den Ansprüchen 1 bis 10.

12. Verwendung von Polyetheresteramiden nach den Ansprüchen 1 bis 11 zum Heißsiegeln von Textilien.

## Claims

1. Polyetheresteramides consisting of from 60 to 80 wt.% of a polyamide block obtainable from the following monomers:

from 20 to 40 wt.% of caprolactam or aminocaproic acid
from 30 to 50 wt.% of 11-aminoundecanoic acid
from 20 to 40 wt.% of adduct of hexamethylenediamine and decanedicarboxylic acid,

wherein the total quantity of these polyamide-forming monomers amounts to 100 wt.%, and from 20 to 40 wt.% of a polyether diol/dicarboxylic acid block obtainable from equimolar quantities of polyethylene glycol having a molecular weight $\overline{M}_n$ of from 400 to 2000 and one or more saturated aliphatic dicarboxylic acids having 6 to 36 carbon atoms.

2. Polyetheresteramides according to claim 1, characterised in that the polyamide block is obtainable from the following monomers:

from 30 to 40 wt.% of caprolactam or aminocaproic acid
from 30 to 40 wt.% of 11-aminoundecanoic acid
from 25 to 35 wt.% of adduct of hexamethylenediamine and decanedicarboxylic acid,

wherein the total quantity of these polyamide-forming monomers amounts to 100 wt.%.

3. Polyetheresteramides according to claim 1, characterised in that the polyamide block is obtainable from the following monomers:

from 33 to 37 wt.% of caprolactam or aminocaproic acid
from 33 to 37 wt.% of 11-aminoundecanoic acid
from 28 to 32 wt.% of adduct of hexamethylenediamine and decanedicarboxylic acid,

wherein the total quantity of these polyamide-forming monomers amounts to 100 wt.%.

4. Polyetheresteramides according to claim 1, characterised in that they consist of from 65 to 75 wt.% of the polyamide block and from 25 to 35 wt.% of the polyether diol/dicarboxylic acid block.

9

5. Polyetheresteramides according to claim 1, characterised in that they consist of from 68 to 72 wt.% of the polyamide block and from 32 to 28 wt.% of the polyether diol/dicarboxylic acid block.

6. Method for the preparation of polyetheresteramides, characterised in that, referred to the total quantity of components reacted, from 60 to 80 wt.% of a monomer mixture comprising

   from 20 to 40 wt.% of caprolactam or aminocaproic acid
   from 30 to 50 wt.% of 11-aminoundecanoic acid
   from 20 to 40 wt.% of adduct of hexamethylenediamine and decanedicarboxylic acid,

   wherein the total quantity of these polyamide-forming monomers amounts to 100 wt.% and from 20 to 40 wt.% of equimolar quantities of a polyethylene glycol diol having a molecular weight $\overline{M}_n$ of from 400 to 2000 and one or more saturated aliphatic dicarboxylic acids having 6 to 36 carbon atoms are polycondensed, with firstly the polyamide-forming monomers and the saturated aliphatic dicarboxylic acids being reacted in a manner known per se with formation of a polyamide having terminal carboxyl groups, and the reaction product then being reacted together with the polyethylene glycol diol, optionally in the presence of a conventional catalyst.

7. Method according to claim 6, characterised in that the polyamide block is obtained by the reaction of

   from 30 to 40 wt.% of caprolactam or aminocaproic acid
   from 30 to 40 wt.% of 11-aminoundecanoic acid
   from 25 to 35 wt.% of adduct of hexamethylenediamine and decanedicarboxylic acid.

8. Method according to claim 6, characterised in that the polyamide block is obtained by the reaction of

   from 33 to 37 wt.% of caprolactam or aminocaproic acid
   from 33 to 37 wt.% of 11-aminoundecanoic acid
   from 28 to 22 wt.% of adduct of hexamethylenediamine and decanedicarboxylic acid.

9. Method according to claims 6 to 8, characterised in that the polyetheresteramide is formed from 65 to 75 wt.% of the polyamide block and from 25 to 35 wt.% of the polyether diol/dicarboxylic acid block.

10. Method according to claims 6 to 8, characterised in that the polyetheresteramide is formed from 68 to 72 wt.% of the polyamide block and from 32 to 28 wt.% of the polyetherester block.

11. Spun fleeces from the polyetheresteramides according to claims 1 to 10.

12. Use of the polyetheresteramides according to claims 1 to 11 for the heat sealing of textiles.

**Revendications**

1. Polyétheresteramides consistant en 60 à 80 % en poids d'un bloc de polyamide obtenu à partir des monomères suuivants :

   20 à 40 % en poids de caprolactame ou d'acide aminocaproïque,
   30 à 50 % en poids d'acide 11-aminoundécanoïque,
   20 à 40 % en poids d'un adduct de l'hexaméthylènediamine et de l'acide décanedicarboxylique,

   la quantité totale de ces monomères formant un polyamide représentant 100 % en poids, et 20 à 40 % en poids d'un bloc polyétherdiol/acide dicarboxylique obtenu à partir de quantités équimoléculaires d'un polyéthylèneglycol de poids moléculaire $\overline{M}_n$ 400 à 2000 et d'un ou plusieurs acides dicarboxyliques aliphatiques saturés en C6-C36.

2. Polyétheresteramides selon revendication 1, caractérisés en ce que le bloc de polyamide est obtenu à partir des monomères suivants :

   30 à 40 % en poids de caprolactame ou d'acide aminocaproïque,
   30 à 40 % en poids d'acide 11-aminoundécanoïque,

25 à 35 % en poids d'un adduct de l'examéthylènediamine et de l'acide décanedicarboxylique,

la quantité totale de ces monomères formant le polyamide représentant 100 % en poids.

3.  Polyétheresteramides selon revendication 1, caractérisés en ce que le bloc de polyamide est obtenu à partir des monomères suivants :

     33 à 37 % en poids de caprolactame ou d'acide aminocaproïque,
     33 à 37 % en poids d'acide 11-aminoundécanoïque,
     28 à 32 % en poids d'un adduct de l'hexaméthylènediamine et de l'acide décanedicarboxylique,

la quantité totale de ces monomères formant le polyamide représentant 100 % en poids.

4.  Polyétheresteramides selon revendication 1, caractérisés en ce qu'ils consistent en

     65 à 75 % en poids du bloc de polyamide et
     25 à 35 % en poids du bloc polyétherdiol/ acide dicarboxylique.

5.  Polyétheresteramides selon revendication 1, caractérisés en ce qu'ils consistent en

     68 à 72 % en poids du bloc de polyamide et
     32 à 28 % en poids du bloc polyétherdiol/ acide dicarboxylique.

6.  Procédé de préparation de polyétheresteramides, caractérisé en ce que l'on soumet à polycondensation - par rapport à la quantité totale des composants qui réagissent - 60 à 80 % en poids d'un mélange de monomères consistant en

     20 à 40 % en poids de caprolactame ou d'acide aminocaproïque,
     30 à 50 % en poids d'acide 11-aminoundécanoïque,
     20 à 40 % en poids d'un adduct de l'hexaméthylènediamine et de l'acide décanedicarboxylique,

la quantité totale de ces monomères formant le polyamide représentant 100 % en poids, et 20 à 40 % en poids de quantités équimoléculaires d'un polyéthylèneglycoldiol de poids moléculaire $\overline{M}_n$ 400 à 2 000 et d'un ou plusieurs dicarboxyliques aliphatiques saturés en C6-C36, en faisant réagir d'abord, de manière connue en soi, les monomères formant le polyamide et les acides dicarboxyliques aliphatiques saturés avec formation d'un polyamide à groupes carboxyle terminaux qu'on fait ensuite réagir avec le polyéthylèneglycoldiol, éventuellement en présence d'un catalyseur usuel.

7.  Procédé selon revendication 6, caractérisé en ce que le bloc de polyamide est formé par réaction de

     30 à 40 % en poids de caprolactame ou d'acide aminocaproïque,
     30 à 40 % en poids d'acide 11-aminoundécanoïque,
     25 à 35 % en poids d'adduct de l'hexaméthylènediamine et de l'acide décanedicarboxylique.

8.  Procédé selon revendication 6, caractérisé en ce que le bloc de polyamide est formé par réaction de

     33 à 37 % en poids de caprolactame ou d'acide aminocaproïque,
     33 à 37 % en poids d'acide 11-aminoundécanoïque,
     28 à 22 % en poids d'adduct de l'hexaméthylènediamine et de l'acide décanedicarboxylique.

9.  Procédé selon les revendications 6 à 8, caractérisé en ce que le polyétheresteramide est constitué de

     65 à 75 % en poids du bloc de polyamide et
     25 à 35 % en poids du bloc polyétherdiol/acide dicarboxylique.

10. Procédé selon les revendications 6 à 8, caractérisé en ce que le polyétheresteramide est constitué de

     68 à 72 % en poids du bloc de polyamide et

32 à 28 % en poids du bloc de polyétherester.

11. Nappes de filage obtenues à partir des polyétheresteramides selon les revendications 1 à 10.

12. Utilisation des polyétheresteramides selon les revendications 1 à 11 pour le collage de textiles à chaud.